(19) Europäisches Patentamt
European Patent Office
Office européen des brevets

(11) Veröffentlichungsnummer : **0 367 071 B1**

(12) # EUROPÄISCHE PATENTSCHRIFT

(45) Veröffentlichungstag der Patentschrift : **30.12.92 Patentblatt 92/53**

(51) Int. Cl.$^5$ : **C08L 75/00,** C08G 18/69, B29C 33/62, // (C08L75/00, 9:00), B29K75:00

(21) Anmeldenummer : **89119709.7**

(22) Anmeldetag : **24.10.89**

(54) **Verfahren zur Herstellung von Polyurethan- und/oder Polyharnstoffformkörpern.**

(30) Priorität : **03.11.88 DE 3837351**

(43) Veröffentlichungstag der Anmeldung : **09.05.90 Patentblatt 90/19**

(45) Bekanntmachung des Hinweises auf die Patenterteilung : **30.12.92 Patentblatt 92/53**

(84) Benannte Vertragsstaaten : **BE DE ES GB IT NL**

(56) Entgegenhaltungen :
**EP-A- 173 004**
**EP-A- 0 118 171**
**EP-A- 0 320 833**
**FR-A- 2 277 842**
**US-A- 3 310 604**

(73) Patentinhaber : **Th. Goldschmidt AG**
**Goldschmidtstrasse 100 Postfach 101461**
**W-4300 Essen 1 (DE)**

(72) Erfinder : **Burkhart, Georg, Dr.**
**Barkhovenallee 22**
**W-4300 Essen 16 (DE)**
Erfinder : **Kollmeier, Hans-Joachim, Dr.**
**Barkhorstrücken 27**
**W-4300 Essen (DE)**
Erfinder : **Lammerting, Hemut**
**Schweerstrasse 12**
**W-5812 Herbede (DE)**

**EP 0 367 071 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Verfahren zur Herstellung von Polyurethan-und/oder Polyharnstofformkörpern mit gegebenenfalls zellförmigem Kern durch Umsetzung von mindestens einem Polyol bzw.einem Polyamin mit einem organischen Di- oder Polyisocyanat in Gegenwart von Katalysatoren, Trennmitteln und gegebenenfalls üblichen Zusatzmitteln, wie Vernetzern, Kettenverlängerungsmitteln, Treibmitteln, Stabilisatoren, Zellregulatoren, Pigmenten und Füllstoffen.

Polyurethanformkörper oder Polyurethanformschäume werden durch Umsetzung von mindestens einem Polyol (Polyether- oder Polyesterpolyol) mit einem organischen Di- oder Polyisocyanat erhalten. Die entsprechenden Polyharnstofformkörper erhält man durch Umsetzung eines Polyamins, wie z. B. eines Polyoxypropylendiamins, mit einem organischen Di- oder Polyisocyanat. Formkörper, welche sowohl Urethan- wie Harnstoffgruppen enthalten, können in an sich bekannter Weise nach dem Stand der Technik dadurch hergestellt werden, daß man Polyole mit organischen Dioder Polyisocyanaten in Gegenwart von Aminvernetzern umsetzt.

Polyurethan- bzw. Polyharnstofformteile werden in großem Umfang als Karosserieteile, wie Schürzen, Spoiler, Kotflügel oder zur Herstellung von Sitzen in der Automobilindustrie verwendet. Aufgrund ihrer Zähigkeit und Abriebfestigkeit können Polyurethan- bzw. Polyharnstoffpolymerisate auch zur Herstellung von Schuhsohlen, Absätzen und ähnlichen Produkten verwendet werden.

Die Aushärtung der Polyurethan- bzw. Polyharnstoffprodukte geschieht häufig unter gleichzeitiger Formgebung in geschlossenen, geheizten Formen. Dabei hat insbesondere das Reaction-Injection-Molding-Verfahren, das auch als RIM-Verfahren bezeichnet wird, besondere Bedeutung erlangt.

Ein erhebliches Problem ergibt sich daraus, daß die geformten Polyurethanteile dazu neigen, mit der inneren Formwandung zu verkleben. Zwar sind dem mit der Herstellung von Formteilen aus reaktiven Massen vertrauten Fachmann Trennmittel in großer Zahl bekannt. Derartige Trennmittel können auf die Innenwände der Formen aufgebracht oder als interne Trennmittel dem Reaktionsansatz zugegeben werden. Die internen Trennmittel können unterschiedlichen Substanzklassen angehören. Als interne Trennmittel werden Metallseifen, wie z.B. Zinkstearat, Ester höherer Fettsäuren, natürliche oder synthetische Öle, Wachse oder Silicone, verwendet.

Dabei sind als interne Trennmittel insbesondere solche Produkte bevorzugt, die eine besondere Vorbereitung der Formen überflüssig machen, die Eigenschaften des ausreagierten, geformten Kunststoffes nicht beeinflussen und möglichst keine Änderung der Oberflächeneigenschaften der Formteile, wie etwa eine Beeinträchtigung der Lackierbarkeit, verursachen. Die internen Trennmittel sollen im Reaktionsansatz gut verteilbar sein, müssen sich aber, um trennend wirken zu können, an der Oberfläche des Formteiles anreichern.

Beispiele von internen Trennmitteln, die insbesondere bei der Herstellung von Polyurethan- bzw. Polyharnstofformteilen nach dem RIM-Verfahren eingesetzt werden sollen, sind siliciumorganische Blockmischpolymerisate, welche neben Siloxanblöcken Polyoxyalkylenblöcke aufweisen. Dabei spielt offenbar die Struktur der Verbindungen eine für das Trennverhalten wesentliche Rolle.

So ist z.B. der DE-OS 25 43 638 zu entnehmen, daß die Verbindungen der Formel

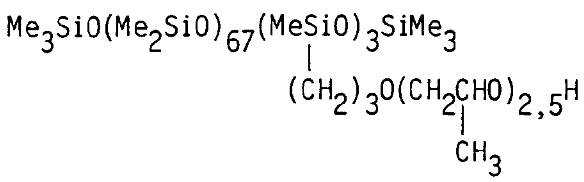

II

den Verbindungen mit der Formel

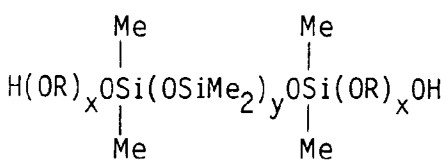

und/oder

III

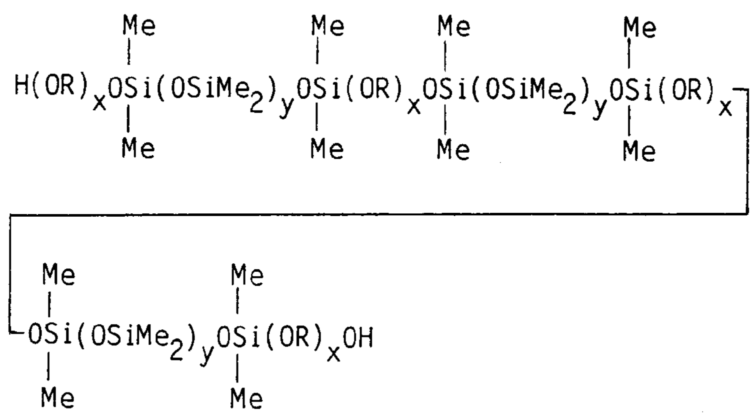

IV

unterlegen sein sollen, wobei in den Formeln III und IV die Indices x jeweils einen Mittelwert von 3 bis 45 haben, der Index y jeweils für einen Mittelwert von 8 bis 198 steht, Me Methyl bedeutet und der Rest $(-OR)_x$ für ein Polyoxyalkylenpolymer oder ein Polyoxyalkylencopolymer steht, wobei R aus Ethylenresten oder Butylenresten oder Gemischen aus Ethylen- oder Butylenresten mit Propylenresten zusammengesetzt ist, wobei die Mengen aus Ethylen- oder Butylenresten im Verhältnis zur Menge der Propylenreste so gewählt ist, das das Verhältnis aus den Kohlenstoffatomen zu den Sauerstoffatomen im gesamten Block (-OR-) 2,0 : 1 bis 2,9 : 1 ausmacht.

Dieser Offenlegungsschrift können auch Testmethoden zur Ermittlung und zum Vergleich der Trennfähigkeit verschiedener Trennmittel entnommen werden.

Die auf dem Markt befindlichen internen Trennmittel können noch nicht in allen Punkten befriedigen, insbesondere ist es erwünscht, das Trennverhalten weiter zu verbessern.

Ein weiterer Nachteil der bekannten internen Trennmittel besteht darin, daß sie bei der Herstellung von Polyurethanformkörpern mit zellförmigem Kern die Ausbildung oder Aufrechterhaltung der zellularen Struktur behindern und im Grenzfalle den gebildeten Schaum kollabieren lassen. Die Ausbildung der zellularen Struktur im Inneren des Formkörpers ist aber von Bedeutung für den Erhalt von Formkörpern einwandfreier Oberflächen, sowie im Hinblick auf die mechanischen Eigenschaften des erhaltenen Formkörpers.

Manche Anwender wünschen als Trennmittel Produkte, welche frei von SiOSi-Verbindungen sind, da sie mögliche Störungen bei der späteren Bearbeitung der Formkörper, wie z.B. bei deren Lackierung, befürchten. Es ist deshalb erwünscht, dem Anwender hochwirksame siliciumfreie Trennmittel zur Verfügung zu stellen.

Der Erfindung liegt deshalb die Aufgabe zugrunde, interne Trennmittel zur Herstellung von Polyurethan- und/oder Polyharnstoffformteilen, insbesondere nach dem RIM-Verfahren, zu finden, welche den bekannten internen Trennmitteln bezüglich ihrer Trenneigenschaften überlegen sind, die eingangs gezeigten Anforderungen möglichst optimal erfüllen und darüber hinaus für den Fall der Herstellung von Polyurethan- und/oder Polyharnstoffformkörpern mit zellularem Kern die Ausbildung und/oder Aufrechterhaltung der Zellstruktur nicht verhindern oder beeinträchtigen.

Überraschenderweise wird hervorragende Trennwirkung beobachtet, wenn man erfindungsgemäß als internes Trennmittel flüssiges Polybutadien, welches frei von Hydroxylgruppen ist, mit einem mittleren Molekulargewicht von 1500 bis 6000 in Mengen von 0,5 bis 5 Gew.-%, bezogen auf Reaktionsansatz, verwendet.

Vorzugsweise verwendet man Polybutadien mit einem mittleren Molekulargewicht von 2000 bis 4000.

Insbesondere hat sich ein Polybutadien als Trennmittel für das vorgenannte Verfahren als brauchbar erwiesen, welches ein mittleres Molekulargewicht von etwa 3000 aufweist und folgende Zusammensetzung hat; ca. 75 % 1,4-cis-Doppelbindungen, ca. 24 % 1,4-trans-Doppelbindungen, ca. 1 % Vinyl-Doppelbindungen.

Vorzugsweise gibt man das Polybutadien dem Polyol bzw. Polyamin in Form eines Gemisches, bestehend aus 90 bis 95 Gew.-% Polybutadien und 5 bis 10 Gew.-% eines nichtionogenen Emulgators, zu.

Das Polybutadien wird vorzugsweise der Polyol- bzw. Polyaminkomponente zugesetzt. Es läßt sich durch Rühren im Polyol bzw. Polyamin verteilen. Die Dispergierung des Polybutadiens in dem Polyol bzw. dem Polyamin kann durch gleichzeitigen Zusatz eines nichtionogenen Emulgators weiter verbessert werden. Dabei ist es zweckmäßig, den Emulgator mit dem Polybutadien zu mischen und das Gemisch der Polyol- bzw. Polyaminkomponente zuzugeben.

Als nichtionogene Emulgatoren eignen sich Ethylenoxidanlagerungsprodukte an Fettalkohole oder Alkohole der Oxosynthese. Insbesondere geeignet sind Anlagerungsprodukte von 4 bis 25 Mol Ethylenoxid an Fettalkohol, wie Laurylalkohol, Oleylalkohol oder Stearylalkohol. Es ist auch möglich, Ethylenoxid und Propylenoxid blockweise oder statistisch verteilt anzulagern.

Das Polybutadien wird in einer Menge von 0,5 bis 5 Gew.-%, bezogen auf Reaktionsansatz, zugesetzt. Besonders bevorzugt wird das Polybutadien in einer Menge von 1,5 bis 2,5 Gew.-% eingesetzt.

Das bei dem erfindungsgemäßen Verfahren verwendete Polybutadien erleichtert die Entformung erheblich. In Verbindung mit externen Trennmitteln steigt die Zahl der Entformungscyclen wesentlich an und ist der Zahl, die mit flüssigen Siliconen erreichbar ist, vergleichbar. Das Trennmittel übt keinen schädlichen Einfluß auf die Schaumbildung

In den folgenden Beispielen wird die Herstellung von Polyurethanformkörpern entsprechend der Erfindung gezeigt. Dabei werden die erfindungsgemäß zu verwendenden Trennmittel in ihrer Wirksamkeit mit Produkten des Standes der Technik verglichen. Dazu werden Trenn- und Luftbeladungsversuche in Labortestverfahren durchgeführt.

Für die Versuche werden folgende Verbindungen verwendet:

<u>erfindungsgemäße Substanzen:</u>

Verbindung A = flüssiges Polybutadien, $\overline{M}$G 1800
Verbindung B = flüssiges Polybutadien, $\overline{M}$G 3000
Verbindung C = flüssiges Polybutadien, $\overline{M}$G 6000

<u>Vergleichssubstanzen:</u>

Verbindung D Zinkstearat
Verbindung E laut US-PS 4 076 695
Verbindung F laut DE-OS 25 43 638

A Trennversuche

Versuch 1

Hierzu wird eine typische RIM-Formulierung mit einem Handmischgerät zubereitet. Man gibt das Gemisch in eine Testform und läßt es darin reagieren. Bei jeweils sonst identischen Rezepturen und Verfahrensbedingungen werden interne Trennmittel des Standes der Technik und beim erfindungsgemäßen Verfahren zu verwendende Trennmittel zugesetzt. Zusätzlich wird eine Testverschäumung ohne Trennmittelzusatz durchgeführt.

Versuchsdurchführung

80,0 Gew.-Teile eines Polyetherpolyols mit der OH-Zahl 27, das durch Anlagerung von Propylenoxid an Trimethylolpropan und anschließende Anlagerung von Ethylenoxid hergestellt worden war, werden mit 28,0 Gew.-Teilen Ethylenglykol, 0,35 Gew.-Teilen Triethylendiamin, 0,02 Gew.-Teilen Dibutylzinndilaurat und 5,0 Gew.-Teilen einer erfindungsgemäßen Substanz, eines flüssigen Polybutadiens gemischt.

Als Isocyanat wird ein durch Umsetzung von 4,4-Diisocyanatodiphenylmethan mit Tripropylenglykol erhaltenes Produkt, NCO-Gehalt 23 %, verwendet (Isocyanatkomponente). Jeweils 100,0 Gew.-Teile der Polyolkomponente werden mit 127,0 Gew.-Teilen der Isocyanatkomponente durch intensives Rühren mit einem Laborrührer mit 2500 Umdrehungen in 7 Sekunden vermischt. Das noch flüssig vorliegende Reaktionsgemisch wird in eine auf 70°C temperierte verschließbare Aluminiumform gegossen. Zum Verschließen der Form dient ein separater Deckel, der mit Schraubzwingen befestigt wird. Die Formeninnenflächen und die Innenseite des zum Verschließen verwendeten Deckels werden vor dem Eingießen der Reaktionsmasse mit einem Trennmittel versehen. Dazu wird das Trennmittel mit einem Lappen sehr dünn aufgetragen und poliert. Nach einer Standzeit von 4 Minuten wird der Deckel der Form entfernt, und es werden die dabei notwendigen Zugkräfte mit einer Federwaage gemessen. Ohne Verwendung eines internen Trennmittels verklebt der Deckel mit dem Reaktionsgut, so daß beim gewaltsamen Entfernen des Deckels die Oberfläche des Formlings beschädigt wird und die Teile des Reaktionsgutes auf der Deckelinnenseite haften. Bei Verwendung interner Trennmittel wird die Entfernung des Formendeckels wesentlich erleichtert und eine Beschädigung der Oberfläche des Formlings vermieden. Die Ergebnisse von Vergleichsversuchen sind in der folgenden Tabelle 1 zusammengestellt.

Bei Überprüfung der Vergleichssubstanz D (Zinkstearat) wird dieses zuvor in einem Teil des verwendeten Polyetherpolyols dispergiert und somit eine 20 %ige Dispersion zubereitet. Daraufhin wird wie bei der Überprüfung der erfindungsgemäßen Substanzen verfahren. Zur überprüfung der Vergleichssubstanz E wird wie bei der Überprüfung der erfindungsgemäßen Substanzen verfahren. Die Zugabemenge des Trennmittels beträgt jeweils 1,94 Gew.-%, bezogen auf den Reaktionsansatz.

Tabelle 1

| Produkt | Trennkraft [ N/100 $cm^2$ ] |
|---|---|
| Blindversuch ohne Zusatz | 40 |
| erfindungsgemäß: | |
| Verbindung A | 10 |
| Verbindung B | 12 |
| nicht erfindungsgemäß: | |
| Verbindung D | 30 |
| Verbindung E | 24 |

Die gemessenen Trennkräfte belegen die hohe Wirksamkeit der beim erfindungsgemäßen Verfahren zu verwendenden Trennmittel.

Versuch 2

Bei einem weiteren Beispiel wurde eine typische Integralschaumformulierung, die als Treibmittel Monofluortrichlormethan enthält, mit einem Handmischgerät zubereitet. Man gibt auch hier das Gemisch in eine Testform und läßt es darin reagieren. Bei den jeweils sonst identischen Rezepturen und Verfahrensbedingungen werden interne Trennmittel des Standes der Technik und beim erfindungsgemäßen Verfahren zu verwendende Trennmittel zugesetzt. Zusätzlich wird eine Testverschäumung ohne Trennmittelzusatz durchgeführt.

Versuchsdurchführung

100,0 Gew.-Teile eines Polyetherpolyols mit einer OH-Zahl 27, das durch Anlagerung von Propylenoxid an Trimethylolpropan und anschließende Anlagerung von Ethylenoxid hergestellt worden war, werden mit 9,0 Gew.-Teilen Butandiol-1,4, 0,65 Gew.-Teilen Triethylendiamin, 1,75 Gew.-Teilen Triethanolamin, 5,0 Gew.-Teilen Monofluortrichlormethan als Treibmittel und 4,0 Gew.-Teilen der erfindungsgemäßen Substanzen gemischt.

Als Isocyanat wird ein durch Umsetzung von 4,4-Diisocyanatodiphenylmethan mit Tripropylenglykol erhaltenes Produkt, NCO-Gehalt 23 %, verwendet (Isocyanatkomponente). Jeweils 100,0 Gew.-Teile der Polyolkomponente werden mit 54,0 Gew.-Teilen der Isocyanatkomponente durch intensives Rühren mit einem Laborrührer mit 2500 Umdrehungen in 7 Sekunden vermischt. Das noch flüssig vorliegende Reaktionsgemisch wird in eine auf 45°C temperierte verschließbare Aluminiumform gegossen. Daraufhin wird so verfahren, wie in Versuch 1 angeführt.

Ohne Verwendung eines internen Trennmittels verklebt der Deckel mit dem Reaktionsgut, so daß beim gewaltsamen Entfernen des Deckels die Oberfläche des Formlings beschädigt wird und Teile des Reaktionsgutes auf der Deckelinnenseite haften. Bei der Verwendung interner Trennmittel wird die Entfernung des Formendeckels wesentlich erleichtert und eine Beschädigung der Formteiloberfläche vermieden. Die Ergebnisse von Vergleichsversuchen sind in der Tabelle 2 zusammengestellt.

Als erfindungsgemäß zu verwendende Polymerisate werden die in der Beschreibung genannten Verbindungen B und C verwendet. Als Produkte des Standes der Technik werden die Verbindungen D (Zinkstearat) und F gemäß DE-OS 25 43 638 verwendet. Bei der Überprüfung der Verbindung D wird ebenfalls, wie in Versuch 1 beschrieben, eine 20 %ige Dispersion des Zinkstearats in den verwendeten Verschäumungspolyether eingesetzt. Bei Verbindung F wird in analoger Weise wie beim Einsatz der erfindungsgemäßen Substanzen verfahren.

Die Zugabemenge der Trennmittel beträgt jeweils 2,15 Gew.-%, bezogen auf den Reaktionsansatz.

Tabelle 2

| Produkt | Trennkraft [N/100 $cm^2$] |
|---|---|
| Blindversuch ohne Zusatz | 55 |
| erfindungsgemäß: | |
| Verbindung B | 24 |
| Verbindung C | 29 |
| nicht erfindungsgemäß: | |
| Verbindung D | 47 |
| Verbindung F | 25 * |

* starke Zellvergröberung erkennbar

Die gemessenen Trennkräfte belegen die hohe Wirksamkeit der beim erfindungsgemäßen Verfahren zu verwendenden Trennmittel. Die Verbindung F weist ebenfalls eine gute Trennwirkung auf, erweist sich jedoch als aktiver Entschäumer, so daß der Formkörper eine stark vergröberte Zellstruktur mit partiellen Kollapszonen aufweist und somit unbrauchbar wird.

Versuch 3

In einem weiteren Beispiel wurde eine typische RIM-Formulierung mit einem aminischen Vernetzer in analoger Weise zu Versuch 1 zubereitet. Man gibt das Gemisch in eine Testform und läßt es darin reagieren. Bei jeweils sonst identischen Rezepturen und Verfahrensbedingungen werden interne Trennmittel des Standes der Technik und beim erfindungsgemäßen Verfahren zu verwendende Trennmittel zugesetzt. Zusätzlich wird eine Testverschäumung ohne Trennmittelzusatz durchgeführt.

Versuchsdurchführung

100,0 Gew.-Teile eines Polyetherpolyols mit einer OH-Zahl 27, das durch Anlagerung von Propylenoxid an Trimethylolpropan und anschließender Anlagerung von Ethylenoxid hergestellt worden war, werden mit 21,0 Gew.-Teilen Diethyltoluoldiamin (DETDA) und 3,0 Gew.-Teilen des erfindungsgemäßen Trennmittels gemischt. Als Isocyanat wird ein durch Umsetzung von 4,4-Diisocyanatodiphenylmethan mit Tripropylenglykol erhaltenes Produkt, NCO-Gehalt 23 %, verwendet (Isocyanatkomponente). Jeweils 100,0 Gew.-Teile der Polyolkomponente werden mit 52,0 Gew.Teilen Isocyanatkomponente durch intensives Rühren mit einem Laborrührer mit

3500 Umdrehungen in ca. 5 Sekunden vermischt. Das noch flüssig vorliegende Reaktionsgemisch wird in eine auf 70°C temperierte verschließbare Aluminiumform gegossen. Daraufhin wird so verfahren, wie in Versuch 1 beschrieben. Ohne Verwendung eines internen Trennmittels verklebt der Deckel mit dem Reaktionsgut, so daß beim gewaltsamen Entfernen des Deckels die Oberfläche des Formlings beschädigt wird und die Teile des Reaktionsgutes auf der Deckelinnenseite haften. Bei Verwendung interner Trennmittel wird die Entfernung des Formendeckels wesentlich erleichtert und eine Beschädigung der Oberfläche des Formlings vermieden. Die Ergebnisse von Vergleichsversuchen sind in der Tabelle 3 zusammengestellt. Als erfindungsgemäß zu verwendende Polymerisate werden die in der Beschreibung genannten Verbindungen A und B verwendet. Als Produkte des Standes der Technik werden die Verbindungen E und F verwendet. Zur Überprüfung der Vergleichsverbindungen wird in analoger Weise wie bei der Überprüfung der erfindungsgemäßen Substanzen verfahren. Die Zugabemenge der Trennmittel beträgt jeweils 1,59 %, bezogen auf den Reaktionsansatz.

Tabelle 3

| Produkt | Trennkraft [N/100 $cm^2$] |
|---|---|
| Blindversuch ohne Zusatz | 30 |
| erfindungsgemäß: | |
| Verbindung A | 7 |
| Verbindung B | 8 |
| nicht erfindungsgemäß: | |
| Verbindung E | 10 * |
| Verbindung F | 9 * |

* verhindert die Schaumbildung

Die gemessenen Trennkräfte belegen die hohe Wirksamkeit der beim erfindungsgemäßen Verfahren zu verwendenden Trennmittel. Die Vergleichssubstanzen der Verbindungen E und F weisen zwar eine gute Trennwirkung auf, verhindern jedoch die Schaumbildung beim Einmischen von Luft in Rezirkulationssystemen von RIM-Anlagen.

B Luftbeladungsversuche

In einem separaten Test wird das Luftbeladungsvermögen von Polyolkomponenten beim Zusatz der erfindungsgemäßen Substanzen gemessen und mit den Produkten vom Stand der Technik verglichen. Zur Versuchsdurchführung werden 88,0 Gew.-Teile des zuvor verwendeten Polyether- polyols gemäß Versuch 1 mit 28,0 Gew.-Teilen Ethylenglykol, 0,35 Gew.-Teilen Triethylendiamin, 0,02 Gew.-Teilen Dibutylzinndi- laurat und jeweils 3 Gew.-Teilen der Verbindungen der erfindungsgemäßen Substanzen A bis C gemischt. In analoger Weise wird mit den Vergleichssubstanzen E und F verfahren. Zur Überprüfung der Vergleichssubstanz D (Zinkstearat) wird eine 20 %ige Dispersion in dem Polyetherpolyol, wie zuvor beschrieben) verwendet und in analoger Weise verfahren.

Das Gemisch wird 4 Minuten lang bei 2300 Umdrehungen intensiv gerührt, um dabei möglichst viel Luft einzuschlagen. Danach werden 70 g in einem Standzylinder abgewogen. Es wird unmittelbar nach dem Einfüllen der Substanz die Füllhöhe dieses Flüssigkeits-/Luftgemisches gemessen. In der Tabelle 4 sind die Ergebnisse des Luftbeladungstests aufgeführt:

Tabelle 4

| Produkt | Füllstand in ml |
|---|---|
| Blindversuch ohne Zusatz | 77,0 |
| erfindungsgemäß: | |
| Verbindung A | 77,5 |
| Verbindung B | 77,0 |
| Verbindung C | 77,5 |
| nicht erfindungsgemäß: | |
| Verbindung D | 84,0 |
| Verbindung E | 72,0 * |
| Verbindung F | 72,0 * |

* keine Luftblasen erkennbar

Die Ergebnisse zeigen, daß die beim erfindungsgemäßen Verfahren zu verwendenden Substanzen in der Lage sind, eine Luftbeladung zu ermöglichen. Die Vergleichsverbindungen E und F verhindern die Bildung eines stabilen Luft-/Polyolgemisches. Zinkstearat (Vergleichsverbindung D) ermöglicht zwar eine Luftbeladung, weist jedoch - gemessen an den erfindungsgemäß zu verwendenden Substanzen - eine wesentlich geringere Trennwirkung auf.

Das erfindungsgemäße Verfahren ermöglicht daher eine erhebliche Reduzierung der Entformungskräfte bei Erhalt einer Schaumstruktur. Der Erhalt dieser Schaumstruktur und die Möglichkeit einer Luftbeladung in Rezirkulationskreisläufen in RIM-Anlagen wird angestrebt, um damit die Formteilqualität erheblich zu verbessern. In Systemen, in denen zusätzlich physikalische oder chemische Treibmittel verwendet werden, ist der Erhalt der Schaumstruktur zur Erzielung guter Gebrauchseigenschaften zwingend notwendig.

**Patentansprüche**

1. Verfahren zur Herstellung von Polyurethan- und/oder Polyharnstofformkörpern mit gegebenenfalls zellförmigem Kern durch Umsetzung von mindestens einem Polyol bzw. einem Polyamin mit einem organischen Dioder Polyisocyanat in Gegenwart von Katalysatoren, Trennmitteln und gegebenenfalls üblichen Zusatzmitteln, wie Vernetzern, Kettenverlängerungsmitteln, Treibmitteln, Stabilisatoren, Zellregulatoren, Pigmenten und Füllstoffen, dadurch gekennzeichnet, daß man als internes Trennmittel flüssiges Polybutadien, welches frei von Hydroxylgruppen ist, mit einem mittleren Molekulargewicht von 1500 bis 6000 in Mengen von 0,5 bis 5 Gew.-%, bezogen auf Reaktionsansatz, verwendet.

2. Verfahren nach Anspruch 1, dadurch gekennzeichnet, daß man Polybutadien mit einem mittleren Molekulargewicht von 2000 bis 4000 verwendet.

3. Verfahren nach Anspruch 1 oder 2, dadurch gekennzeichnet, daß man das Polybutadien der Polyol- bzw. Polyaminkomponente zugibt.

4. Verfahren nach Anspruch 3, dadurch gekennzeichnet, daß man das Polybutadien dem Polyol bzw. Polyamin in Form eines Gemisches, bestehend aus 90 bis 95 Gew.-% Polybutadien und 5 bis 10 Gew.-% eines nichtionogenen Emulgators, zugibt.

## Claims

1. Process for the production of polyurethane and/or polyurea mouldings optionally having a cellular core by reaction of at least one polyol or one polyamine with an organic di- or polyisocyanate in the presence of catalysts, release agents and if appropriate customary additives, such as crosslinking agents, chain-lengthening agents, blowing agents, stabilisers, cell regulators, pigments and fillers, characterised in that liquid polybutadiene which is free from hydroxyl groups and has an average molecular weight of 1500 to 6000 is used as an internal release agent in amounts of 0.5 to 5 % by weight, based on the reaction batch.

2. Process according to Claim 1, characterised in that polybutadiene having an average molecular weight of 2000 to 4000 is used.

3. Process according to Claim 1 or 2, characterised in that the polybutadiene is added to the polyol or polyamine component.

4. Process according to Claim 3, characterised in that the polybutadiene is added to the polyol or polyamine in the form of a mixture consisting of 90 to 95 % by weight of polybutadiene and 5 to 10 % by weight of a nonionic emulsifier.

## Revendications

1. Procédé de fabrication de corps moulés en polyuréthane et/ou en polyurée avec éventuellement un noyau cellulaire par réaction respectivement d'au moins un polyol ou d'une polyamine avec un di- ou polyisocyanate organique en présence de catalyseurs, agents de démoulage, et éventuellement additifs complémentaires tels qu'agents de réticulation, agents de prolongement de chaîne, agents moussants, stabilisants, régulateur de cellules, pigments et charges, caractérisé en ce qu'on utilise en tant qu'agents de démoulage du polybutadiène liquide, exempt de radicaux hydroxyle et ayant un poids moléculaire moyen de 1500 à 6000 en une quantité de 0,5 à 5% en poids calculée sur le milieu réactionnel.

2. Procédé suivant la revendication 1, caractérisé en ce qu'on utilise un polybutadiène ayant un poids moléculaire moyen de 2000 à 4000.

3. Procédé suivant la revendication 1 ou 2, caractérisé en ce qu'on ajoute le polybutadiène respectivement aux composés du polyol ou de la polyamine.

4. Procédé suivant la revendication 3, caractérisé en ce qu'on ajoute le polybutadiène respectivement au polyol ou à la polyamine sous la forme d'un mélange constitué de 90 à 95% en poids de polybutadiène et de 5 à 10% en poids d'agents émulsionnants non ioniques.